# EUROPEAN PATENT APPLICATION

(11) **EP 2 278 673 A2**
(43) Date of publication of application: **26.01.2011**
(21) Application number: 10169652.4
(22) Date of filing: 15.07.2010
(51) Int. Cl.: H02G 3/06, H02G 3/08

(54) **Arrangement for utilization in electrical connections**

(30) Priority: 23.07.2009 FI 20095806
(71) Applicant: ABB Oy, 00380 Helsinki (FI)
(72) Inventor: Turunen, Harri, 07900, Loviisa (FI)
(74) Representative: Sole, Timo

(57) **Abstract**

The invention relates to an arrangement for implementing electrical connections. The arrangement comprises at least one end piece and at least one extension piece to said at least one end piece for providing an extended assembly of a desired size, said at least one end piece and at least one extension piece each comprising at least one attachment point 114 and mutually symmetrical formations of symmetry 100, which include complementary locking elements for integrating said at least one end piece and at least one extension piece to each other in such a way that said integration results in a locking type engagement between the at least one end piece and the at least one extension piece by the relative action between said formations of symmetry (100) and the locking elements included therein for providing a desirable-size, at least one junction box comprising arrangement for electrical connections in such a way that, as a distance between an attachment point 114 of the at least one end piece and an attachment point 114 of the at least one extension piece, the arrangement comprises a valid installation-standard complying attachment gauge for electrical components.

## Description

### Field of the invention

The invention relates to articles which are needed in the making of electrical connections carried out in buildings or vehicles.

### Prior art

In the process of establishing an electrical conduit installation according to the prior art, the employed frame component comprises an article in the form of a single non-dismountable assembly, whose size cannot be changed after the article has been manufactured. What are required in the manufacturing process, at the stage of casting such a ceramic or plastic article, are separate molds for various size categories of the discussed article, depending on how many products the article has been intended for. Thus, there is no adjustment option for the article size in the manufacturing process other than molds of varying sizes, incurring considerable extra costs in the manufacture of such articles in terms of both material and time.

### Brief description of the invention

An objective of the invention is the implementation of articles needed for example in the electrical connections of buildings, said implementation providing a range of various size categories for electrical connections in a cost-efficient manner. This is accomplished by an arrangement for providing at least one junction box comprising at least one end piece and at least one extension piece to said at least one end piece for making an extended assembly of a desired size, said at least one end piece and at least one extension piece each comprising at least one attachment point and mutually symmetrical formations, which include complementary locking elements for attaching said at least one end piece and at least one extension piece to each other in such a way that said attachment results in a locking engagement between the at least one end piece and the at least one extension piece by the relative action between said symmetrical formations and the locking elements included therein for providing a desirable-size, at least one junction box comprising arrangement for electrical connections. In order to achieve modularity, the arrangement comprises, as a distance between an attachment point of the at least one end piece and an attachment point of the at least one extension piece, an attachment gauge, which achieves modular expansibility and has a standard size in each relevant arrangement, for utilizing said attachment gauge in the process of accomplishing at least one junction box by assembling said applicable components (end piece, extension piece) as modules.

The invention is based on making use of modular dimensions in an arrangement, comprising at least one end piece and at least one extension piece to said at least one end piece for making an extended assembly of a desired size, said at least one end piece and at least one extension piece each comprising at least one attachment point and mutually symmetrical formations of symmetry, which include complementary locking elements. Attachment of the pieces to each other is performed by integrating at least one end piece and at least one extension piece to each other by means of a locking type engagement, which results from the relative action between said formations of symmetry and the locking elements included therein. The utilization of modular dimensions involves providing a desirable-size, at least one junction-box comprising arrangement for electrical connections in such a way that the arrangement comprises a valid installation-standard complying attachment gauge for electrical components as a distance between an attachment point of the at least one end piece and an attachment point of the at least one extension piece.

A benefit of the invention is to achieve savings in the manufacturing process costs, because the number of molds needed in the casting process is substantially less than in the prior art. The beneficiality of the invention is pronounced for example for a builder, whose purchase acquisitions for the installation of various electrical conduit systems, for example, become more economical and easier by making use of articles of the invention and a range of various sizes achievable thereby.

### List of figures

Figs. 1A-C show an end piece according to a preferred embodiment of the invention from three different aspects.
Figs. 2A-C show an extension piece according to a preferred embodiment of the invention from three different aspects.
Figs. 3A-C show from three different aspects an assembly according to the preceding embodiment of the invention, in which the end pieces and the extension piece therebetween make up an integrated assembly.

### Detailed description of the invention

For example, the kitchen spaces, bathroom spaces, and living room spaces of residential buildings are locations that require the installation of various numbers of electrical accessories, such as for example socket outlets in the form of junction boxes. Particularly in locations exposed to moisture, such socket-outlet arrangements are required to meet specific quality and safety regulations. In addition, the practical constructivity features of socket outlets are important for the easy and quick performance of mounting and dismounting tasks in building and renovation projects.

In a short version, the solution according to the invention comprises one end piece, and a second end piece as an extension piece thereto, said end pieces comprising locking type formations of symmetry capable of being integrated to each other. When there is a need for constructing a lengthier assembly for example in damp kitchen spaces for several socket outlets, the solution according to the invention comprises an extension piece, which is to be fitted between two end pieces and which comprises at both ends thereof locking type formations of symmetry capable of being integrated to the first and second end pieces. The arrangement according to the invention makes it possible to provide various size categories by utilizing extension pieces manufactured in identical size with the possibility of integrating end pieces of varying lengths to the ends thereof. In addition, the discussed extension piece can also be manufactured in variations of various lengths as necessary. The arrangement according to the invention can also be implemented by manufacturing first end pieces in equal size with a possibility of integrating second end pieces of varying lengths thereto. The pieces manufactured in a standard size category, and the range category of varying-length pieces capable of being integrated thereto, facilitate for example the work of a fitter in the installations of junction box assemblies of desired sizes. Another essential feature in the invention relates to formations of symmetry enabling integrations of pieces with a locking type engagement. When the extension piece is required to have formations of symmetry at more than one end, the formations of symmetry are preferably identical at various ends of the extension piece.

The arrangement according to the invention has its desired size based on modularity, for example such that the arrangement comprises a valid installation-standard complying attachment gauge for electrical components as a distance between an attachment point of at least one end piece and an attachment point of at least one extension piece. When the intended arrangement for electrical connections comprises at least two junction boxes, the distance between the midpoints of junction boxes turns out to be an installation-standard complying modular dimension.

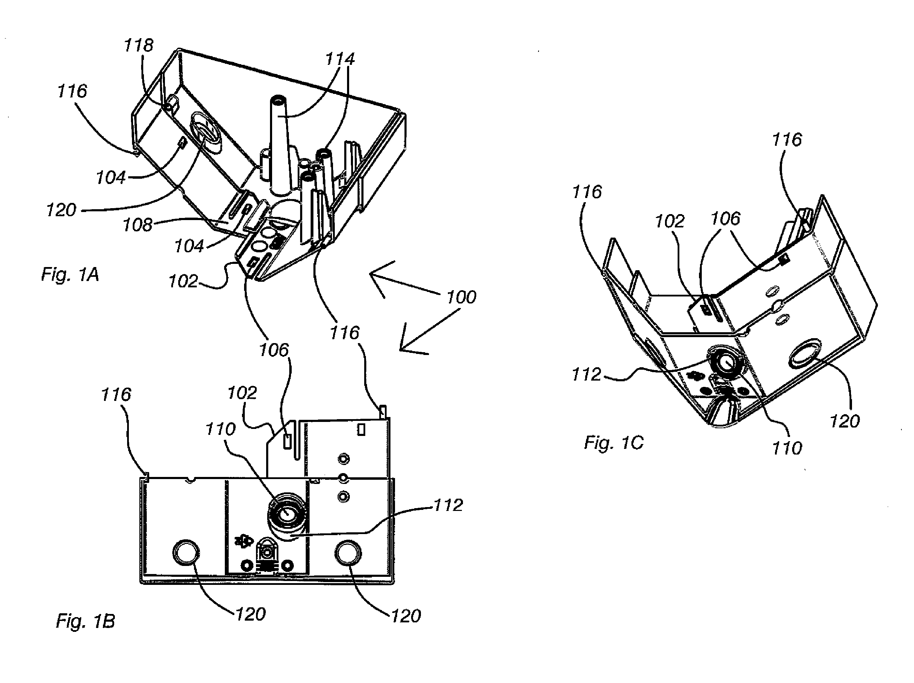

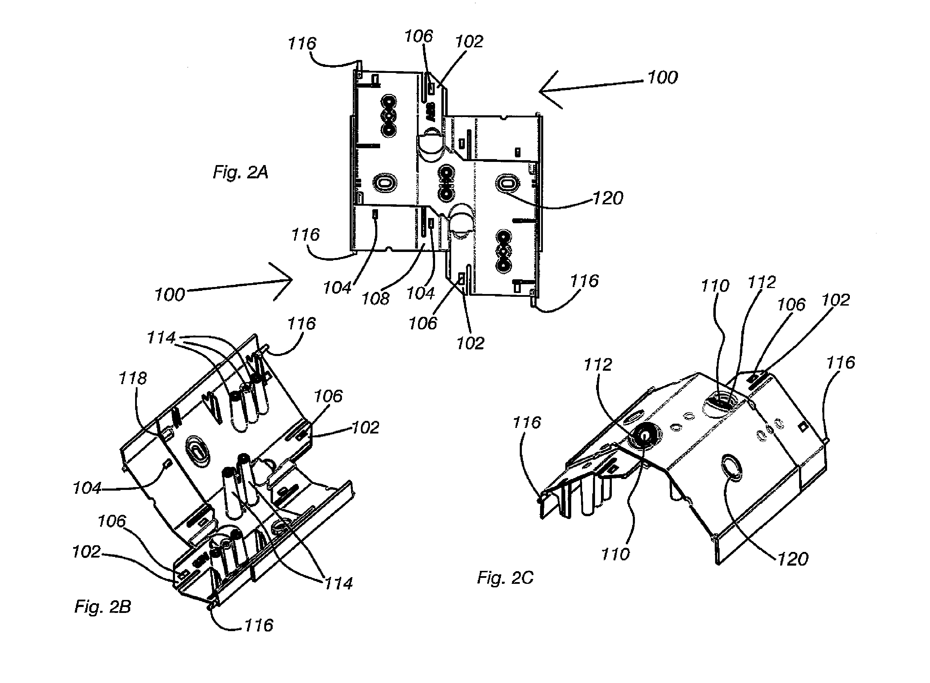

Figs. 1A-C, 2A-C and 3A-C depict from three different aspects an implementation according to a preferred embodiment of the invention in the form of an assembly intended for socket outlets or to be constructed for other types of electrical connection, said assembly comprising an extension piece (figs. 2A-C) and an end piece (figs. 1A-C) integrable in attachment to each end thereof. Formations of symmetry 100 according to a preferred embodiment between the extension piece and the end piece comprise, as complementary locking elements for providing a locking type engagement, a locking tab 102 and, in upcoming formations of symmetry, an attachment pocket 108, in which said locking tab positions itself in an engaged condition. As complementary locking elements, said formations of symmetry 100 also comprise a locking member 104 and a locking recess 106 for providing a locking type engagement, which locking member can be of the type that yields to a compression force as it comes to contact with the wall of upcoming formations of symmetry and the locking member slots in place within the locking recess 106 upon arriving at its location. For a further reinforcement of locking type engagement, the formations of symmetry also comprise locking studs 116 engaging in a locking hole 118 included in the upcoming formations of symmetry.

In articles according to a preferred embodiment of the invention, the inlets or outlets for cables, i.e. passageways 110 for cables (or wires), are set at an inclined angle, for example at an angle of 30-60 degrees, by virtue of which there is achieved a saving of space and an easier installation capability, because the cable need not be bent to unnaturally sharp angles. The discussed inlets of a preferred embodiment further comprise water guide grooves 112, which is a preferred feature especially for socket outlets installed in spaces exposed to moisture, in order to fulfill safety and quality regulations better than in prior art implementations. Thus, the water guide grooves prevent water or other liquid from entering a socket outlet through the passageway 110. Therefore, in embodiments of the invention, there is no absolute necessity for protective metal sheets of the prior art for dripping water. The articles comprise column-like attachment posts 114 for securing socket outlets or the like by means of screws or the like to the discussed articles, i.e. to the end and extension pieces. The articles include also attachment apertures 120 for fastening a socket-outlet assembly or the like, made up according to the invention, by means of screws or the like for example to a kitchen wall.

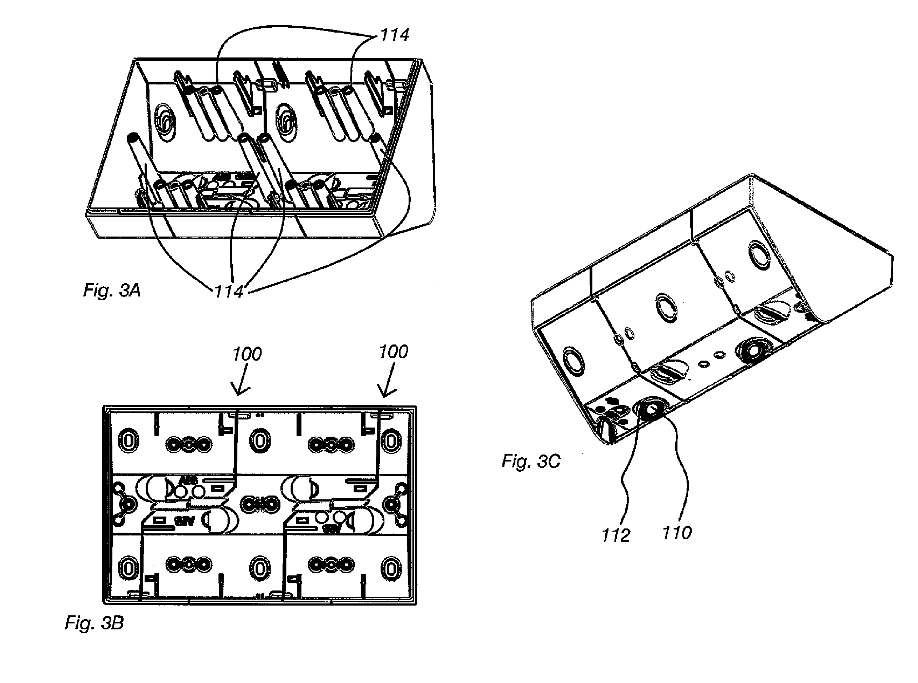

Figs. 3A-C depict an assembly according to a preferred embodiment of the invention, wherein between end pieces as shown in figs. 1A-C is fixedly assembled an extension piece as shown in figs. 2A-C. The locking type formations of symmetry 100 according to the invention have been integrated in attachment to each other. The preferred embodiment of the invention shown in figs. 1A-C, 2A-C and 3A-C may represent, for example, the installation of a socket-outlet set in kitchen spaces to the mains of 230 V. The lengths of extension pieces may comply with standards valid in various countries, such as, for example, with the 71 mm modularity set forth in a standard of The Standards Association of Finland, i.e. SFS standard, and the attachment posts 114 may have relative positions along the periphery of a circle, said circle having a diameter of 60 mm. Any of the attachment posts 114 of the end piece is considered to constitute an attachment point 114 and, respectively, the attachment posts 114 of the extension pieces constitute attachment points 114 for the extension pieces, the distance between said attachment points 114 of various pieces turning out as a valid installation-standard complying attachment gauge for electrical components, and the distance between the midpoints of socket outlets turning out as a valid installation-standard complying modular dimension.

Even though the invention has been described in the foregoing specification with reference to the figures, the invention is nevertheless not limited to the specification and figures but, instead, the invention can be subjected to variations within the scope defined in the claims.

## Claims

1. An arrangement for providing at least one junction box comprising at least one end piece and at least one extension piece to said at least one end piece for making an extended assembly of a desired size, said at least one end piece and at least one extension piece each comprising at least one attachment point (114) and mutually symmetrical formations (100), which include complementary locking elements for attaching said at least one end piece and at least one extension piece to each other in such a way that said attachment results in a locking engagement between the at least one end piece and the at least one extension piece by the relative action between said symmetrical formations (100) and the locking elements included therein for providing a desirable-size, at least one junction box comprising arrangement for electrical connections, **characterized in that**, in order to achieve modularity, the arrangement comprises, as a distance between an attachment point (114) of the at least one end piece and an attachment point (114) of the at least one extension piece, an attachment gauge, which achieves modular expansibility and has a standard size in each relevant arrangement, for utilizing said attachment gauge in the process of accomplishing at least one junction box by assembling said applicable components (end piece, extension piece) as modules.

2. An arrangement as set forth in claim 1, **characterized in that** the arrangement comprises in the end piece at least one attachment post (114) as said attachment point (114) and in the extension piece at least one attachment post (114) as said attachment point (114).

3. An arrangement as set forth in claim 1, **characterized in that**, when the intended arrangement for electrical connections comprises at least two junction boxes, the distance between the midpoints of junction boxes turns out to be a modular dimensions complying with a valid installation standard.

4. An arrangement as set forth in claim 1, **characterized in that** the arrangement comprises a first end piece in an optional size category, a second end piece in an optional size category, and one or more extension pieces, which is/are manufactured in one size category and to the ends of which the end pieces of a selected size are attachable by a locking type engagement.

5. An arrangement as set forth in claim 1, **characterized in that** the arrangement comprises a first end piece manufactured in one size category and a second end piece, which constitutes the extension piece and the size category of which is optional, and the second end piece of a selected size is attachable to the first end piece by a locking type engagement.

6. An arrangement as set forth in claim 1, **characterized in that** the arrangement comprises, as complementary locking elements, in the first symmetrical formations, a locking tab (102), and in second symmetrical formations connecting to the first symmetrical formations, an attachment pocket (108) in which said locking tab positions itself in engagement for establishing a locking engagement.

7. An arrangement as set forth in claim 1, **characterized in that** the arrangement comprises, as complementary locking elements, in the first symmetrical formations, a locking member (104), and in second symmetrical formations connecting to the first symmetrical formations, a locking recess (106) in which said locking member in engagement slots in place upon its arrival at the locking recess for establishing a locking engagement.

8. An arrangement as set forth in claim 1, **characterized in that** the arrangement comprises at least one cable passageway (110) provided at an inclined angle in at least one extension piece and/or in at least one end piece.

9. An arrangement as set forth in claim 8, **characterized in that** the arrangement comprises a water guide groove (112) provided along the edges of said at least one cable passageway (110) for preventing water from entering through the passageway.
